# EUROPÄISCHE PATENTSCHRIFT

(11) **EP 0 418 334 B1**
(45) Veröffentlichungstag und Bekanntmachung des Hinweises auf die Patenterteilung: **21.12.1994**
(21) Anmeldenummer: 90902230.3
(22) Anmeldetag: 25.01.1990
(51) Int. Cl.: B60T 13/52, B60T 13/57

(54) **BREMSKRAFTVERSTÄRKER**
BRAKE BOOSTER
FREIN ASSISTE

(30) Priorität: 17.03.1989 DE 3908805
(43) Veröffentlichungstag der Anmeldung: 27.03.1991
(73) Patentinhaber: ITT Automotive Europe GmbH, 60488 Frankfurt (DE)
(72) Erfinder: SCHONLAU, Jürgen, D-6229 Walluf (DE); BIRKENBACH, Alfred, D-6234 Hattersheim 2 (DE); HARTH, Ralf, D-6370 Oberursel (DE)
(86) Internationale Anmeldenummer: EP9000134
(87) Internationale Veröffentlichungsnummer: WO9011215

(56) Entgegenhaltungen:
- EP-A- 0 298 871
- DE-A- 2 935 286
- DE-A- 3 321 728
- DE-A- 3 533 420
- FR-A- 2 536 715
- GB-A- 2 001 564
- US-A- 3 137 361
- US-A- 3 222 869
- US-A- 3 408 815
- US-A- 3 735 067

## Beschreibung

Die Erfindung betrifft einen pneumatischen Bremskraftverstärker, vorzugsweise Vakuum-Bremskraftverstärker, für fluide, insbesondere hydraulische, Bremssysteme von Kraftfahrzeugen.

Vakuum-Bremskraftverstärker sind Geräte, die das Druckgefälle zwischen dem im Ansaugrohr eines Ottomotors herrschenden Unterdruck und dem atmosphärischen Außendruck als Kraftquelle zur Verstärkung des von der Fußkraft des Fahrers im Hauptzylinder erzeugten hydraulischen Drucks ausnutzen.

Bei Zweitaktmotoren oder bei Dieselmotoren wird in der Regel eine durch den Motor angetriebene Vakuum-Pumpe, die den erforderlichen Unterdruck liefert, eingesetzt.

Derartige Vakuum-Bremskraftgeräte sind unter anderem im Bremsenhandbuch der Firma Alfred Teves GmbH, 8. Auflage, ab Seite 94, sehr ausführlich beschrieben.

Durch die Deutsche Offenlegungsschrift 29 35 286 ist bereits ein Bremskraftverstärker für eine Fahrzeugbremsanlage mit einem Verstärkergehäuse, welches eine vordere und hintere Gehäusewand hat, einem pedalbetätigten Eingangsglied, welches mit einem Ausgangsglied axial ausgerichtet ist, einer das innere des Gehäuses in zwei Kammern unterteilenden beweglichen Wand, die geeignet ist, auf das Ausgangsglied eine Kraft aufzubringen, wenn die Kammern in Abhängigkeit von einer auf das Eingangsglied aufgebrachten Kraft einem Druckunterschied ausgesetzt sind, und einer Kraftübertragungseinrichtung, die sich zwischen der vorderen und hinteren Gehäusewand erstreckt und im Betrieb Bremsreaktionskräfte überträgt, die sonst durch das Gehäuse übertragen würden, bekannt geworden.

In dieser Deutschen Offenlegungsschrift wird vorgeschlagen, daß die Kraftübertragungseinrichtung ein Rohr aufweist, welches mit dem Eingangsglied und dem Ausgangsglied koaxial ist und sich durch die bewegliche Wand erstreckt.

Weiterhin ist ein mechanisch angesteuertes Bremsgerät für ein Kraftfahrzeug, das einen Hauptzylinder und einen Verstärker, der die Druckdifferenz zwischen einem Unterdruck und dem atmosphärischen Druck nutzt, umfasst, wobei der Verstärker im wesentlichen aus einem Unterdruckgehäuse, das aus einem Topfteil und einem Deckelteil zusammengesetzt ist, und einer Druckstange, die zur Einleitung des Bremsvorganges dient, besteht, und Mittel zur Befestigung an einer Spritzwand aufweist, bekannt geworden.

In der letztgenannten Offenlegungsschrift wird vorgeschlagen, daß die Mittel zur Befestigung in der Nähe des Hauptzylinders, vorzugsweise an der dem Hauptzylinder zugewandten Seite des Topfteils, angeordnet sind.

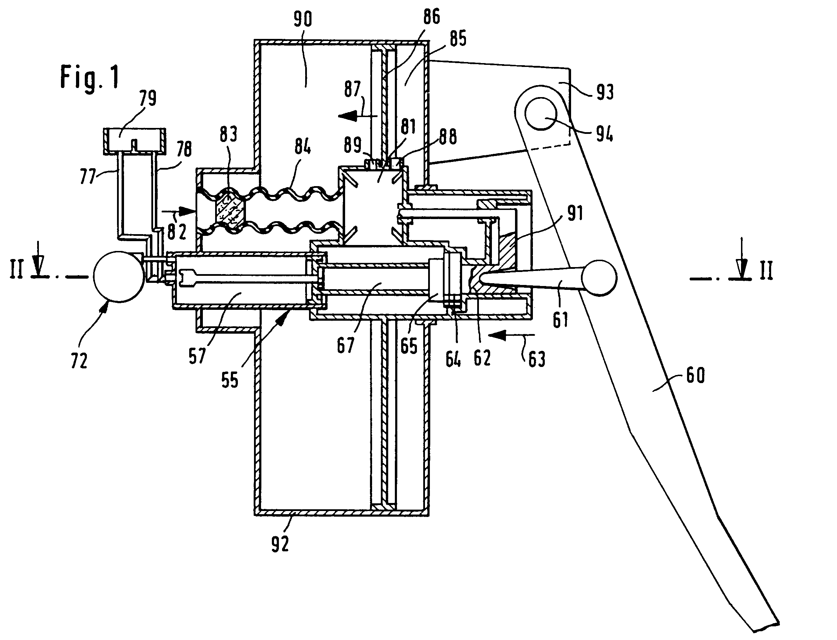

Weiterhin existiert die US-Patentschrift 3137361. Figur 1 dieser amerikanischen Patentschrift zeigt einen Bremskraftverstärker, dessen Gehäuse einen Lagerbock für das Bremspedal aufweist.

Der Erfindung liegen folgende Aufgaben zugrunde:
Bedingt durch die aufwendige Motorenbauweise moderner Kraftfahrzeuge und bedingt durch die größeren Fahrgasträume neuer Modelle wird der Einbauraum für Bremskraftverstärker immer kleiner.

Besondere Einbauprobleme bestehen in Hinsicht auf die axiale Ausdehnung herkömmlicher Aggregate, bestehend aus Hauptzylinder, Bremskraftverstärker, Bremspedal.

Die Erfindung macht sich zur Aufgabe, den Einbauraumbedarf für Bremskraftverstärker drastisch zu reduzieren und insbesondere die axiale Baulänge zu verkürzen.

Weiterhin ist es Aufgabe der Erfindung, verbesserte Voraussetzungen für die automatische und rationalisierte Montage des Bremskraftverstärkers des Bremspedals, des Kupplungspedals und des Kupplungsgeberzylinders im Fahrzeug zu schaffen. Insbesondere soll die bisher notwendige komplizierte Anbringung der Druckstange im Fahrgastraum umgangen werden.

Es gehört weiterhin zur Aufgabenstellung, die Gehäuseschalen des Bremskraftverstärkergehäuses möglichst weitgehend von den bekannten Aufbiegekräften zu entlasten.

Der Erfindung liegt weiterhin die Aufgabe zugrunde, das Gewicht des Bremskraftverstärkers zu reduzieren.

Außerdem sollen Ansauggeräusche im Fahrgastraum vermieden werden. Der bei der Betätigung des Bremskraftverstärkers auftretende Leerweg soll verkürzt werden. Bei Zweikreisbremsanlagen soll eine Druckdifferenz in den Bremskreisen verhindert werden. Weiterhin soll eine konstruktiv einstellbare Pedalwegerhöhung bei Ausfall eines Bremskreises sichergestellt werden.

Eine besondere Aufgabenstellung liegt darin, daß es möglich gemacht werden soll, daß eine vorgefertigte Einheit, bestehend aus dem Verstärker, dem Bremspedal, dem Kupplungspedal und anderen Teilen, zusammen mit dem Armaturenbrett durch die Türwand des entstehenden Autos von dem Innenraum (Passagierraum) aus auf die Spritzwand gesetzt und anschließend vom Motorraum aus verschraubt werden kann. Es ist ohne weiteres einzusehen, daß hierdurch ein hoher Rationalisierungseffekt erzielt wird.

Es gehört weiterhin zur Aufgabenstellung, daß das Pedal möglichst nahe an der Spritzwand positioniert wird. Der Bremskraftverstärker soll andererseits so wenig wie möglich in den Motorraum hineinragen.

Die gestellten Aufgaben werden erfindungsgemäß durch die Kombination folgender Merkmale gelöst:
Das pneumatische Steuerventil des Bremskraftverstärkers, vorzugsweise das Vakuumsteuerventil, ist seitlich neben dem Hauptzylinder des Bremskraftverstärkers, insbesondere parallel zum Hauptzylinder, angeordnet, die als Verstärkermedium dienenden Luft, insbesondere die Außenluft mit atmosphärischem Druck, wird aus dem Motorraum des Fahrzeugs durch den Bremskraftverstärker in dessen pneumatischen, beziehungsweise pneumatische, Druckräume geführt, der Bremskraftverstärker ist Tragelement für mindestens ein Bedienungsorgan, vorzugsweise für das Bremspedal, des Fahrzeugs.

In weiterer Ausgestaltung der Erfindung wird vorgeschlagen, daß der Bremskraftverstärker zusammen mit dem an ihm befestigten Bedienungsorgan, beziehungsweise Bedienungsorganen, vorzugsweise Bremspedal, als eine Einheit vom Innenraum (Fahrgastraum) des Fahrzeugs her an die Spritzwand des Fahrzeugs anbringbar und anschließend vom Motorraum aus verschraubbar, beziehungsweise mit anderen Mitteln befestigbar, ausgestaltet ist.

Eine kostengünstige Bauweise und eine gute Abdichtung ergeben sich dadurch, daß das Gehäuse des Steuerventils (Steuergehäuse) mittels eines Rollmembranelements am Verstärkergehäuse abgedichtet angeordnet ist.

Eine extrem kurze Bauweise wird dadurch erzielt, daß der Hauptzylinder als Twinzylinderaggregat ausgestaltet ist, daß eine hydraulische Ausgleichskolbenzylindereinheit vorgesehen ist für den Druckausgleich zwischen den beiden Zylindern des Twinzylinderaggregats.

In weiterer Ausgestaltung der Erfindung wird vorgeschlagen, daß der Bremskraftverstärker als Tragelement für das Kupplungspedal und den Kupplungsgeberzylinder ausgebildet ist.

Zweckmäßigerweise wird vorgesehen, daß das Bremspedal und das Kupplungspedal nebeneinander und in Hinsicht auf ihre Schwenkachsen koaxial angeordnet sind.

Eine raumsparende Lösung wird dadurch erreicht, daß der Bremslichtschalter am Bremskraftverstärker, vorzugsweise an am Bremskraftverstärker angeordneten Pedalbock für das Bremspedal, angebracht ist und daß er Tragelement für die Bremswarneinrichtung ist.

In einer besonderen Ausführungsform der Erfindung wird vorgesehen, daß ein Betätigungselement, insbesondere ein Hebelelement, zwischen dem Spannstift des Bremskraftverstärkers und dem Schließkörper des Vakuumsteuerventils angeordnet ist, das zur Bewegung des Schließkörpers, zur optimalen Einstellung des Leerwegs des Schließkörpers und/oder zur Einstellung des an sich bekannten Springereffekts des Verstärkers dient.

Weiterhin wird vorgesehen, daß das Verstärkergehäuse aus dem motorraumseitig angeordneten Gehäuseteil und dem innenraumseitig angeordneten Zylinderteil besteht, daß ein Führungsorgan für die Außenluft oder Druckluft vorgesehen ist, das vorzugsweise mit dem Gehäuseteil des Verstärkers verbunden ist. Das Führungsorgan kann ein Rohrelement sein, das mittels einer Außenluftmembran mit dem Gehäuseteil abdichtend verbunden ist. Zur Reduzierung der Herstellungskosten wird vorgeschlagen, daß der einen Kunststoffmantel aufweisende Hauptzylinder an Gehäuseteil angespritzt angeordnet ist, daß ein aus Kunststoff bestehendes Führungselement für die Außenluftrollmembran am Gehäuseteil angespritzt angeordnet ist und daß der aus Kunststoff bestehende Vakuumanschluß des Verstärkers am Gehäuseteil angespritzt angeordnet ist.

Zur Fixierung der Rückstellfedern für den pneumatischen Servokolben wird vorgesehen, daß das Gehäuseteil Einprägungen für die Aufnahme von Rückstellfedern für den pneumatischen Servokolben aufweist, daß insbesondere drei Rückstellfedern vorgesehen sind, die auf einem Teilungskreis um 120 Winkelgrade zueinander versetzt angeordnet sind.

Um die Montage beim Fahrzeughersteller zu vereinfachen, wird weiterhin vorgeschlagen, daß der Bremskraftverstärker eine oder mehrere Laschen oder Flansche zur Befestigung an der Motorspritzwand aufweist.

In einer bevorzugten Ausführungsform wird ein Twinhauptzylinder eingesetzt. Bei dieser Ausführungsform wird vorgeschlagen, daß der Zylinderteil des Bremskraftverstärkergehäuses eine elliptische Öffnung mit Führungsfläche und Anschlag für das Steuergehäuse aufweist.

Zur Rationalisierung der Herstellung wird weiterhin vorgeschlagen, daß im Zylinderteil ein Steuergehäuserollmembranträger vakuumdicht eingepresst ist.

Um die Freigängigkeit des Bremspedals zu gewährleisten, erhält der Steuergehäuserollmembranträger eine Ausnehmung, insbesondere einen Schlitz.

Die Zentrierung zwischen Steuergehäuse und Hauptzylinder wird dadurch erreicht, daß der Zylinderteil und der Gehäuseteil mit je einem Flansch versehen ist, die so ausgebildet sind, daß sie zur gegenseitigen Positionierung genutzt werden können.

In gleicher Weise wird vorgeschlagen, daß die Flansche des Zylinderteils einerseits und des Gehäuseteils andererseits so ausgebildet sind, daß Zylinderteil und Gehäuseteil vor dem Zusammenbau zueinander zentriert werden und daß anschließend eine formschlüssige Verbindung des Zylinderteils und des Gehäuseteils, beispielsweise durch Umbördelung, hergestellt werden kann.

Eine weitere bevorzugte Ausführungsform besteht darin, daß das "Öffnungsmaß K" des tellerförmigen Ventilschließkörpers des Vakuumsteuerventils in Hinsicht auf den Ventilsitz des Vakuumsteuerventils, das zur Leerwegverkürzung dient, und das "Z-Maß", das zur Einstellung des an sich bekannten Springereffekts dient, nach Anlegen des Steuergehäuses an den Zylinderteil des Gehäuses des Bremskraftverstärkers durch Aufsetzen des Hebelelements an den Zylinderteil eingestellt werden.

Dabei kann vorgesehen werden, daß z.B. ein Spannstift vorgesehen ist, der in einem Langloch im Steuergehäuse bewegbar angeordnet ist, daß Langloch und Spannstift eine Wegbegrenzung des Betätigungskolbens beim Lösen und Betätigen der Bremse bilden.

Bei einem Bremskraftverstärker, der mit einem Hauptzylinder ausgerüstet ist, der als Twinzylinderaggregat ausgestaltet ist, wird vorgeschlagen, daß das vakuumseitige Ende des aus Kunststoff bestehenden Steuergehäuses mit einer ovalen Bohrung zur Aufnahme des Twinzylinderaggregats versehen ist, das die Bohrung durch einen Metallring, insbesondere Stahlring, verstärkt ist, der insbesondere vom Twinzylinderaggregat herrührende Biegekräfte aufnimmt, die bei Ausfall eines Zylinders des Twinzylinderaggregats auftreten.

Zum Zwecke des Aufladens des Verstärkers kann vorgesehen werden, daß das Außenluftrohr bei einem aufgeladenen Bremskraftverstärker als pneumatische Druckleitung ausgebildet ist.

Korrespondierend zu den Einprägungen im Gehäuseteil kann vorgesehen werden, daß im Membranteller des Bremskraftverstärkers Einprägungen zur Aufnahme der Rückstellfedern vorgesehen sind, daß die Ausprägungen auf einem Teilungskreis um 120 Winkelgrade versetzt zueinander angeordnet sind.

Eine besonders leichte Bauweise wird dadurch erzielt, daS das Twinzylinderaggregat aus zwei mit Kunststoff umspritzten Zylinderlaufbuchsen und einer über den Zylinderlaufbuchsen und zu den Zylinderlaufbuchsen rechtwinklig angeordneten Differenzdruckkolbeneinheit besteht.

Hydraulische Bremssysteme benötigen eine Bremsflüssigkeitsnachlaufvorrichtung. In weiterer Ausgestaltung der Erfindung wird daher vorgeschlagen, daß eine Bremsflüssigkeitsnachlaufvorrichtung, die ein Zentralventilaggregat umfasst, vorgesehen ist, die eine Nachsaugmanschette aufweist, die in einer Nut im Boden der Hauptzylinderbohrung von einem Zentralventilgehäuse gehalten wird, die eine Rundstange aufweist, die in die Bremsflüssigkeitsbehälteranschlußbohrung ragt und von außen, den Leerweg einstellend, betätigbar ist, die einen Ventilträger aufweist, der auf die Rundstange aufgepresst ist, die einen Ventilkörper aufweist, der den Ventilträger zumindest teilweise umgibt, die ein Gewindestück aufweist, das verdrehsicher und axial verschiebbar im Hauptzylinderkolben untergebracht ist, wobei in das Gewindestück die Rundstange einschraubbar angeordnet ist.

In einem weiteren Ausführungsbeispiel wird vorgesehen, daß fahrzeuginnenraumseitig ein Außengehäuseteil angeordnet ist, das zumindest teilweise den Zylinderteil des Verstärkergehäuses umgibt, das formschlüssig mit dem Verstärkergehäuse verbunden ist, und auf dem ein Pedalbock befestigt ist.

Dabei hat es sich als zweckmäßig herausgestellt, daß am Pedalbock Bremspedal, Kupplungspedal, Bremslichtschalter und/oder Kupplungsgeber angeordnet sind.

Für einen Bremskraftverstärker, dessen pneumatischer Servoteil in Tandembauweise ausgebildet ist, wird vorgeschlagen, daß der Zwischenboden des Tandemservoteils einen Dichtring mit Führung aufweist, der einen Anschlag für das Steuergehäuse darstellt.

Eine zweckmäßige Ausgestaltung dieses letztgenannten Ausführungsbeispiels besteht darin, daß der Zwischenboden mit einem Flansch versehen ist, daß die Flansche des Zwischenbodens, des Zylinderteils und des Gehäuseteils des Verstärkergehäuses so ausgebildet sind, daß beim Zusammenbau eine Zentrierung und eine anschließende formschlüssige Verbindung, zum Beispiel Umbördelung, durchführbar sind und daß das Steuergehäuse mit einem Kanal versehen ist, durch den der fahrzeuginnenraumseitige Unterdruckraum des Bremskraftverstärkers entlüftet wird.

Außerdem kann vorgesehen werden, daß der fahrzeuginnenseitig angeordnete Druckraum des Bremskraftverstärkers durch die Ausnehmung, beziehungsweise den Schlitz, in dem sich das Hebelelement bewegt, belüftet wird.

Zur Positionierung der Rückstellfedern für den Membranteller wird ein Kunststoffteil vorgeschlagen, das am Membranteller anliegt und Führungsteile für die Rückstellfedern aufweist.

Mit der Erfindung werden folgende Vorteile erzielt:
Die gestellten Aufgaben werden gelöst. Der Automobilindustrie wird eine kompakte, raumsparende Lösung zur Verfügung gestellt. Insbesondere die axiale Ausdehnung des Gesamtaggregats ist gegenüber Geräten des Standes der Technik erheblich reduziert.

Es werden gute Voraussetzungen für eine automatische Montage des Bremskraftverstärkers des Bremspedals, des Kupplungspedals und des Kupplungsgeberzylinders geschaffen.

Weitere Einzelheiten der Erfindung sind der folgenden Beschreibung mehrerer Ausführungsbeispiele der Erfindung zu entnehmen.

Diese Ausführungsbeispiele werden anhand von vierzehn Figuren erläutert.

Figur 1 zeigt schematisch in radialer Schnittdarstellung einen Vakuum-Bremskraftverstärker, der mit einem Twinhauptzylinder ausgerüstet ist.

Figur 2 zeigt den Verstärker nach Figur 1 in einer Schnittdarstellung entsprechend der Schnittlinie II/II der Figur 1.

Figur 3 zeigt schematisch in radialer Schnittdarstellung einen Vakuum-Bremskraftverstärker, der mit einem konventionellen Hauptzylinder ausgerüstet ist.

Figur 4 zeigt in schematischer Darstellung einen Bremskraftverstärker als Tragelement für Brems- und Kupplungspedal.

Die Figuren 5 bis 9, 12 bis 14 zeigen konstruktive Ausgestaltungen des Bremskraftverstärkers nach den Figuren 1 und 3.

Figuren 10 und 11 zeigen eine Positioniervorrichtung für Rückstellfedern des Membrantellers.

Bei der nachfolgenden Beschreibung der Ausführungsbeispiele wird von einem Stand der Technik ausgegangen, wie er beispielsweise im Bremsenhandbuch, 8. Neuauflage, der Alfred Teves GmbH, beschrieben wird. Siehe dort unter anderem die Seiten 94 ff.

Die Beschreibungen und Zeichnungen des genannten Bremsenhandbuchs können zur Erläuterung der Ausgangsbasis für die Erfindung und damit für die nachfolgend beschriebenen Ausführungsbeispiele herangezogen werden.

Den Ausführungsbeispielen liegen im wesentlichen zwei Konzepte zugrunde. Das erste Konzept ist die Kombination eines Vakuumbremskraftverstärkers mit einem Twinhauptzylinder. Das zweite Konzept ist die Kombination eines Vakuumbremskraftverstärkers mit einem herkömmlichen Tandemhauptzylinder.

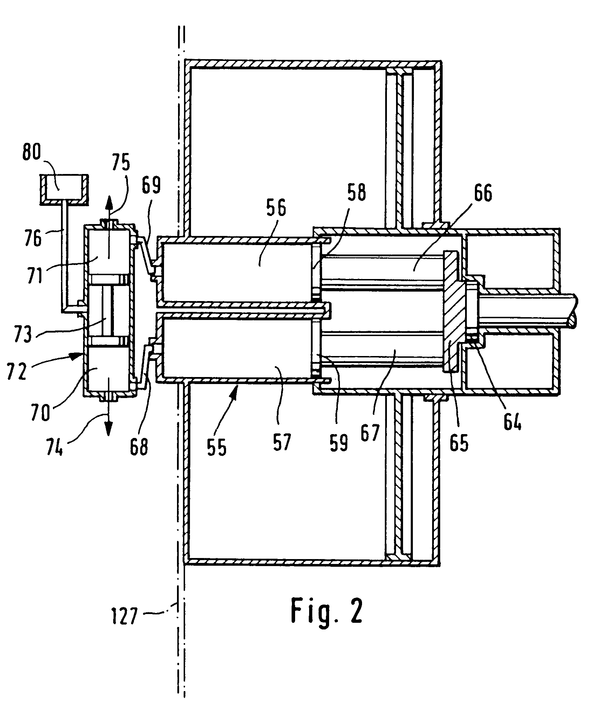

In den Figuren 1 und 2 ist die Kombination eines Vakuumbremskraftverstärkers mit einem Twinhauptzylinder gezeigt. Der Twinhauptzylinder ist in seiner Gesamtheit mit 55 bezeichnet. Er besteht aus zwei Zylinderbohrungen 56, 57, in denen zwei Kolben 58, 59 aufgenommen werden. Bei Betätigung des Bremspedals 60 wird über das Druckorgan 61 auf das Druckstück 62 eine Kraft in Richtung des Pfeils 63 ausgeübt. Die Kraft wird über die an sich bekannte Reaktionsscheibe 64, siehe oben genanntes Bremsenhandbuch, auf das Organ 65 übertragen. Vom Organ 65 wird die Pedalkraft über die Teile 66, 67 auf die Kolben 58, 59 übertragen. In den Zylinderbohrungen 56, 57 baut sich hydraulischer Druck auf. Die Bremsflüssigkeit gelangt über die Kanäle 68, 69 in die Druckräume 70, 71 der Ausgleichskolbenzylindereinheit.

Die Ausgleichskolbenzylindereinheit ist in ihrer Gesamtheit mit 72 bezeichnet. Der Ausgleichskolben selbst trägt die Bezeichnung 73. Von den Druckräumen 70, 71 gelangt das Druckmittel in die beiden Betätigungskreise 74, 75 für die Bremsanlage eines Kraftfahrzeugs. Wie ersichtlich, handelt es sich hier um ein zweikreisiges Bremssystem. Die Ausgleichskolbenzylindereinheit arbeitet nach dem Prinzip, daß bei Druckabfall in einem Kreis ein Ausgleich durch die Verschiebung des Ausgleichskolbens hergestellt wird.

Mit 77, 78 in Figur 1 und 76 in Figur 2 sind die Leitungen zu den Druckmittelvorratsbehältern 79, 80 dargestellt.

Aus Figur 1 ist erkennbar, daß das Vakuumsteuerventil 81 parallel zum Hauptzylinder 55 angeordnet ist. Die unter atmosphärischem Druck stehende Saugluft wird aus dem Motorraum in Richtung des Pfeils 82 angesaugt. Sie gelangt durch den Filter 83 und den rohrförmigen Balg 84 in das Steuerventil 81.

Je nach Steuerung wird der Druckraum 85 in an sich bekannter Weise, siehe hierzu oben genanntes Handbuch, belüftet oder entlüftet. Bei Belüftung verschiebt sich der Servoblechkolben 86 in Richtung des Pfeils 87 nach links und unterstützt die manuell auf das Bremspedal aufgebrachte Kraft. Mit 88 ist eine Öffnung beschrieben, über die die Belüftung des Druckraums 85 erfolgt. Die Entlüftung des Unterdruckraums 90 erfolgt über die Öffnung 89.

Zur weiteren Erläuterung wird auf den bekannten Stand der Technik, siehe oben genanntes Bremsenhandbuch, verwiesen.

Mit 91 ist in Figur 1 ein Organ beschrieben, das vom Bremspedal 60 und dem Druckorgan 61 bewegt wird und das Vakuumsteuerventil betätigt.

Im vorliegenden Ausführungsbeispiel ist am Gehäuse 92 des Bremskraftverstärkers ein Pedalbock 93 angebracht. An diesem Pedalbock ist das Bremspedal 60 angelenkt. Die Anlenkungsachse ist mit 94 bezeichnet. Der Bremskraftverstärker zusammen mit dem vormontierten Bremspedal wird komplett vor der Montage im Fahrzeug zusammengebaut. Anschließend wird diese so hergestellte Einbaueinheit vom Fahrgastraum, beziehungsweise vom Innenraum des Fahrzeugs gegen die Spritzwand 127 bewegt und vom Motorraum her verschraubt.

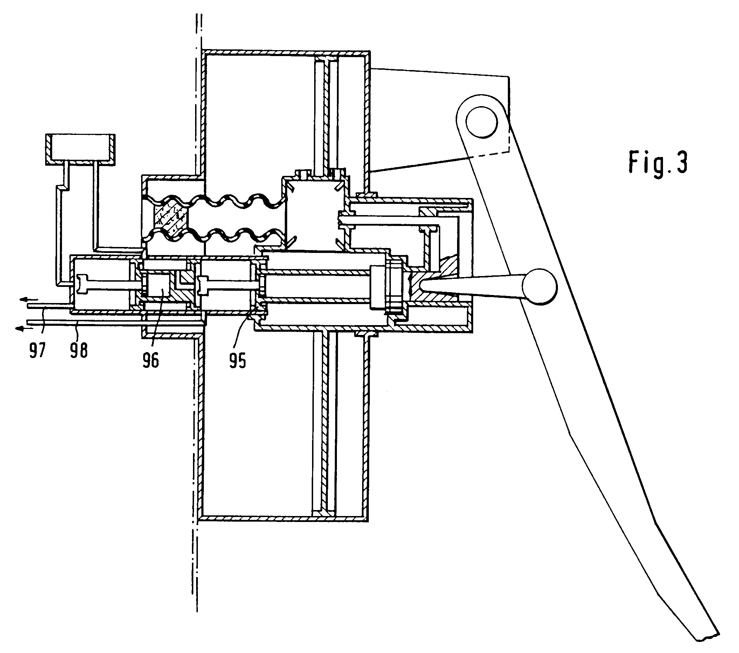

In Figur 3 wird der prinzipielle Aufbau eines Bremskraftverstärkers gezeigt, der mit einem herkömmlichen Tandemhauptzylinder ausgerüstet ist. Der Tandemhauptzylinder ist mit einem Druckstangenkolben 95 und einem Schwimmkolben 96 versehen. Die beiden hydraulischen Betätigungskreise für die Radbremsen sind mit 97, 98 bezeichnet.

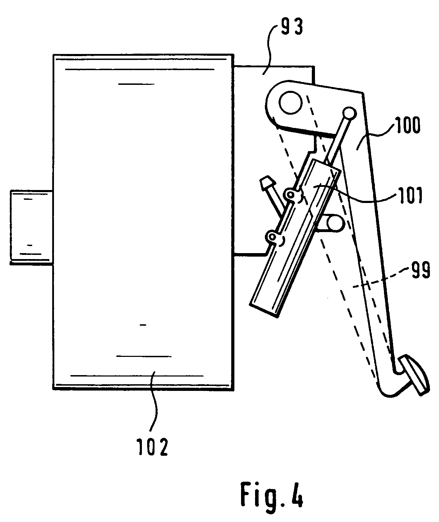

In Figur 4 ist dargestellt, daß der Pedalbock 93 eine Multifunktion erfüllen kann. Er ist einmal Träger des Bremspedals 99, gestrichelt dargestellt, und des Kupplungspedals 100, in ausgezogener Linie dargestellt. Außerdem ist am Pedalbock der Kupplungsgeberzylinder 101 angeordnet. Das Verstärkergehäuse ist mit 102 bezeichnet.

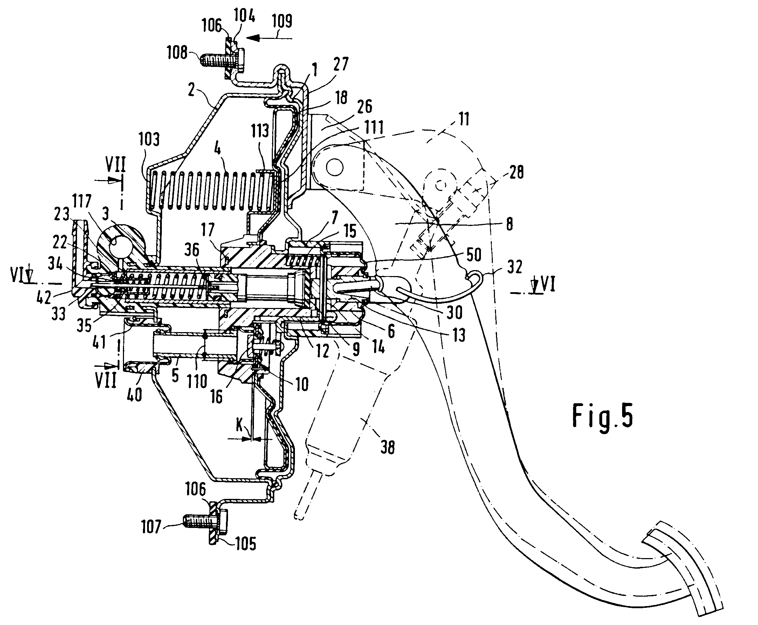

Die Figuren 5 bis 7 zeigen Details eines Bremskraftverstärkers, der mit einem Twinhauptzylinder ausgestattet ist.

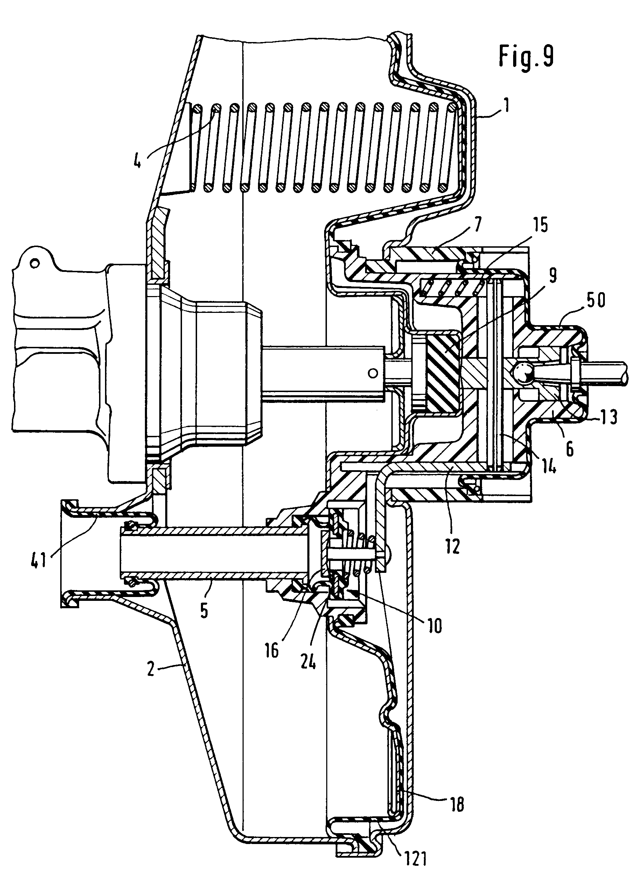

Weitere Einzelheiten dieses Ausführungsbeispiels und eines Ausführungsbeispiel mit konventionellem Tandemhauptzylinder können den Figuren 9 und 12 bis 14 entnommen werden.

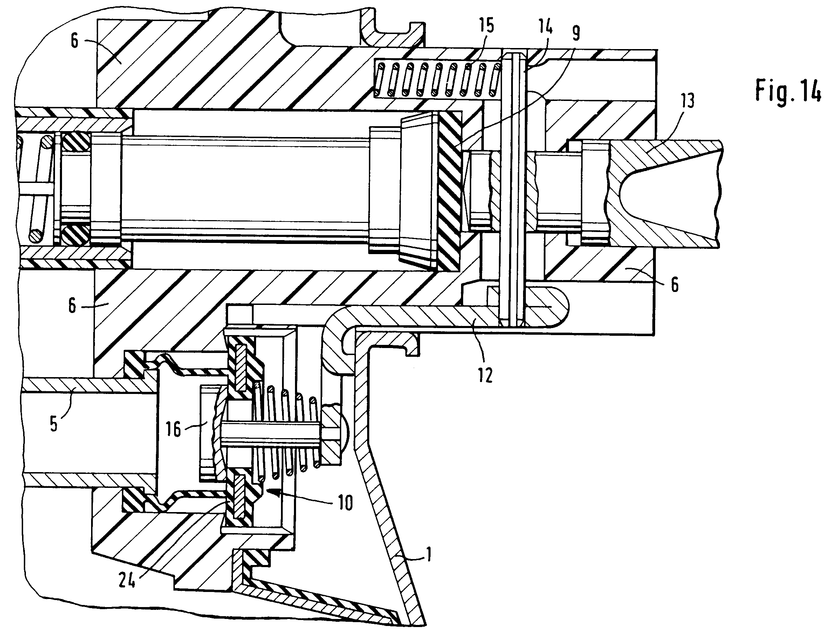

In den Figuren 9 und 14 sind insbesondere Einzelheiten des Vakuumsteuerventils dargestellt.

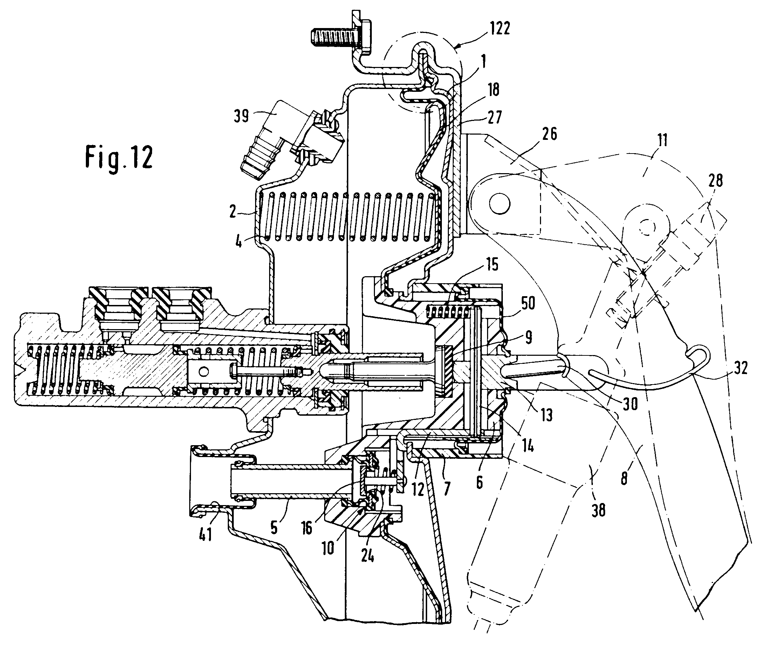

Aus Figur 12 gehen insbesondere die Ausgestaltung und Anordnung des Gehäuseteils und des Zylinderteils des Verstärkergehäuses und eines Außengehäuseteils hervor.

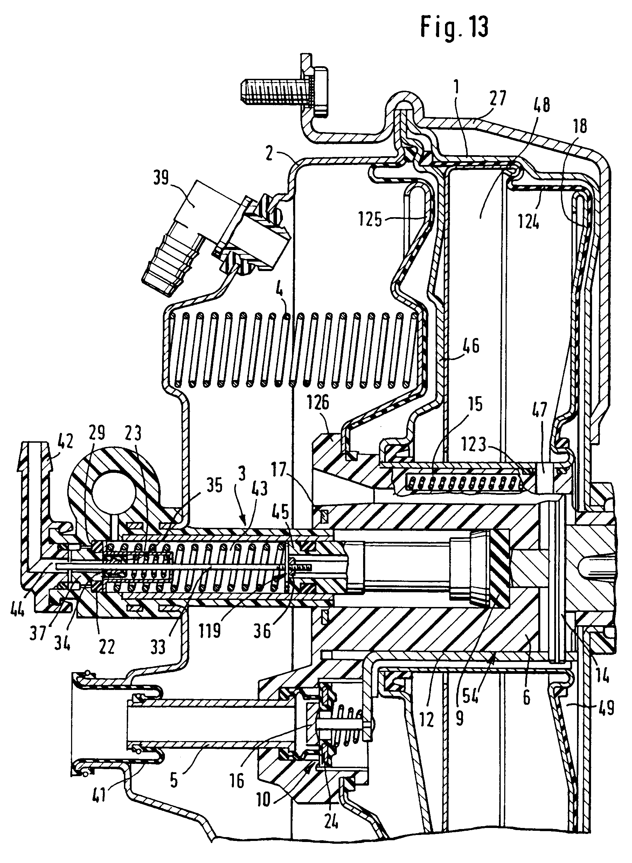

Aus Figur 13 sind Details des Zentralventils des Twinhauptzylinders erkennbar.

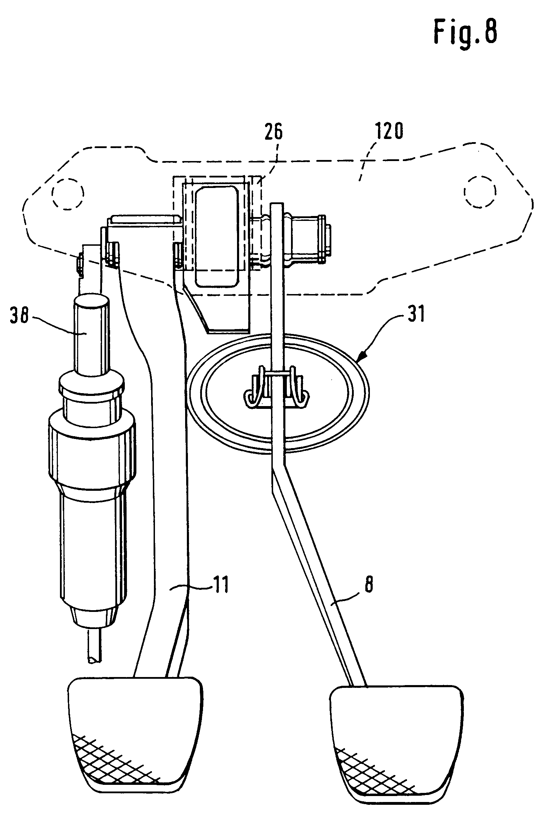

Zur Erläuterung der Anlenkung des Bremspedals und des Kupplungspedals dient die weiter unten im einzelnen noch kommentierte Figur 8.

Das Verstärkergehäuse der Ausführungsbeispiele der Figuren 5 bis 9 und 12 bis 14 besteht aus einem Gehäuseteil 2 und einem Zylinderteil 1. Außerdem ist ein Außengehäuseteil 27 vorgesehen. An dem Außengehäuseteil ist der Pedalbock 26 angeordnet. Am Pedalbock angelenkt ist das Bremspedal 8 (ausgezogene Linien in Figur 5) und das Kupplungspedal 11 (gestrichelte Linien in Figur 5).

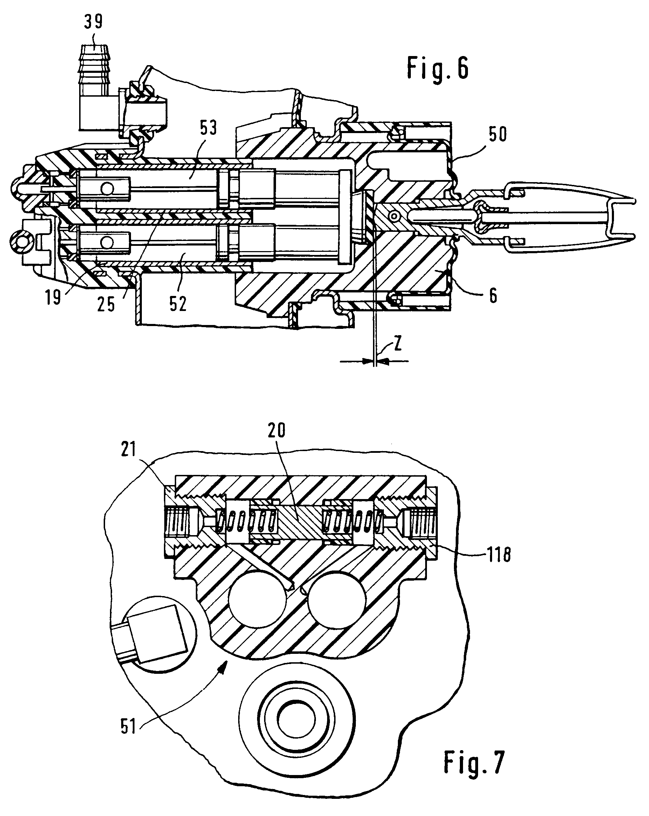

Weiterhin ist in Figur 5 der Geberzylinder 38 des Kupplungssystems dargestellt. Am Gehäuseteil 2 ist der Twinhauptzylinder 3 und die Führung 40 für die Außenluftmembran angespritzt. Der Vakuumanschluß 39 ist, siehe Figur 6, ebenfalls am Gehäuseteil angespritzt.

Im Gehäuseteil befinden sich drei um 120 Grad versetzte Einprägungen, von denen eine mit 103 bezeichnet ist. Diese Einprägungen dienen zur Aufnahme der Rückstellfedern für den Servoblechkolben, beziehungsweise für den Membranteller 18 dieses Servokolbens.

Mittels einer oder mehrerer Laschen 104, 105 und mittels Schraubenbolzen 107, 108 ist der Bremskraftverstärkers an der Motorspritzwand 106 befestigt. Die korrespndierenden Muttern sind nicht dargestellt.

Die gesamte Einheit, bestehend aus Bremskraftverstärker mit Hauptzylinder, Bremspedal, Kupplungspedal und Kupplungsgeberzylinder wird vorgefertigt. Vom Fahrzeuginnern wird diese Einheit in Richtung des Pfeils 109 auf die Spritzwand gesetzt und anschließend vom Motorraum aus verschraubt.

Der Zylinderteil 1 besitzt eine elliptische Öffnung 31, siehe Figur 8, mit Führungsfläche und Anschlag für das Steuergehäuse, das in seiner Gesamtheit mit 6 bezeichnet ist.

Im Zylinderteil 1 ist der Rollmembranträger 7 vakuumdicht eingepresst. Der Rollmembranträger 7 hat eine Ausnehmung, beziehungsweise einen Schlitz, um die Freigängikeit des Bremspedals 8 zu gewährleisten. Der Flansch des Zylinderteils und der Flansch des Gehäuseteils sind so ausgebildet, daß eine Zentrierung zwischen dem Steuergehäuse 6 und dem Twinhauptzylinder 3 während des Zusammenbaus dieser beiden Teile erzielt wird. Der Zusammenbau kann durch formschlüssige Verbindung, beispielsweise durch Umbördelung erfolgen.

Das Steuergehäuse enthält die an sich bekannte Reaktionsscheibe 9 und das Vakuumsteuerventil oder auch "Tellerventil" genannt, das in seiner Gesamtheit mit 10 bezeichnet wird. Das Vakuumsteuerventil umfasst unter anderem einen tellerförmigen Ventilschließkörper 16. Das Öffnungsmaß K des tellerförmigen Schließkörpers 16 in Hinsicht auf den Ventilsitz 24, siehe Figur 9, und das für den bekannten Sprungeffekt des Verstärkers verantwortliche, in der Verstärkertechnik mit "Z-Maß" bezeichnete Maß, wird nach Anlegen des Steuergehäuses an den Zylinderteil und durch Aufsetzen des Hebelelements 12 an den Zylinderteil erreicht.

Die Rückstellkräfte auf den Betätigungskolben 13 werden über den Spannstift 14 und das Hebelelement 12 geleitet und durch die Pedalrückholfeder 15 und durch den pneumatischen Druck, der auf den Querschnitt 110 wirkt, erzeugt.

Der Spannstift bewegt sich im Steuergehäuse in einem Langloch, das gleichzeitig die Wegbegrenzung des Betätigungskolbens 13 beim Lösen und Betätigen der Bremse ist.

Der tellerförmige Ventilschließkörper 16 wird mit dem Hebelelement 12 formschlüssig verbunden.

Das Tellerventil, bestehend aus tellerförmigem Ventilschließkörper 16 und Ventilsitz 24, siehe Figur 9, ist mit dem Außenluftrohr 5 im Steuergehäuse druckdicht eingeklemmt.

Das Außenluftrohr kann als pneumatische Druckleitung benutzt werden, wenn ein Bremskraftverstärker zum Einsatz kommt, der aufgeladen werden kann.

Im Bereich der linken Seite des Steuergehäuses 6, das heißt im Bereich des Vakuums, befindet sich im Steuergehäuse eine ovale Bohrung zur Aufnahme des Twinhauptzylinders. Diese Bohrung ist durch einen Stahlring 17 verstärkt. Der Stahlring dient zur Aufnahme von Kräften, die der Twinhauptzylinder auf das Steuergehäuse ausübt und zwar insbesondere dann, wenn in einem Druckraum des Twinhauptzylinders durch einen Defekt Druck ausfällt.

Der Membranteller sitzt auf einem umlaufenden Absatz am Steuergehäuse und wird dort an mehreren Stellen fixiert. Im Membranteller 18 befinden sich drei um 120 Grad versetzte Einprägungen für die Rückstellfeder. Eine Einprägung ist aus Figur 5 erkennbar, sie trägt die Bezugsziffer 111. Die dazugehörende Rückstellfeder ist mit 4 bezeichnet. Die korrespondierende Einprägung des Gehäusesteil 2 trägt die Bezugsziffer 103.

Die drei Rückstellfedern werden durch ein Kunststoffteil fixiert. Dieses Kunststoffteil ist in den Figuren 5, 10 und 11 dargestellt und mit 113 bezeichnet. Aus der Formgebung des Kunststoffteils ist erkennbar, daß in den Achsen 114, 115, 116 die Rückstellfedern 4 positioniert werden.

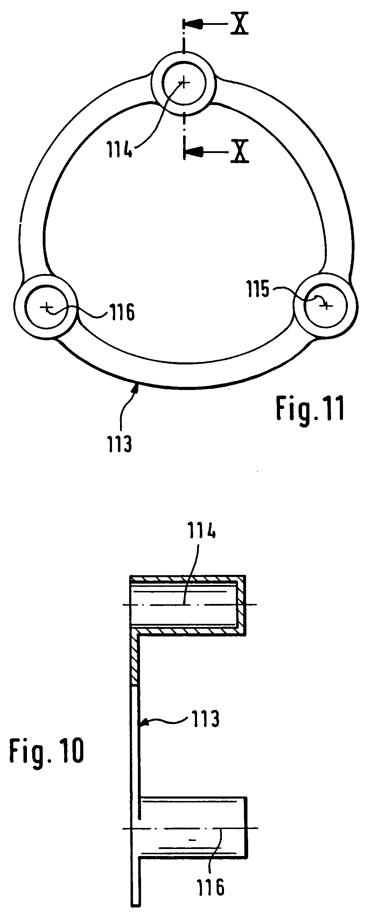

Figur 10 zeigt eine Seitenansicht, teilweise geschnitten, und zwar ensprechend der Schnittlinie X/X der Figur 11. Figur 11 zeigt eine Draufsicht.

Die Figuren 5, 6 und 7 zeigen unter anderem Details des Twinhauptzylinders. Figur 6 ist eine Schnittdarstellung entsprechend der Schnittlinie VI/VI der Figur 5. Figur 7 ist eine Schnittdarstellung entsprechend der Schnittliene VII/VII der Figur 5.

Der Twinhauptzylinder besteht aus zwei umspritzten Zylinderlaufbuchsen, die in Figur 6 mit 19, 25 bezeichnet sind. Rechtwinklig darüber ist die Bohrung 117 für den Differenzdruckkolben 20, siehe Figur 7, die mit zwei Anschlußgewindeschrauben 21, 118 verschlossen ist, angeordnet.

Bei dem Twinhauptzylinder kommt eine Bremsflüssigkeitsnachsaug- oder Nachlaufvorrichtung, die ein Zentralventil umfaßt, zum Einsatz, wie es in Figur 13 genauer dargestellt ist.

Diese Nachsaugvorrichtung umfasst eine Nachsaugmanschette 22. Sie sitzt in einer Nut 29 im Zylinderboden 37 und wird dort von dem Zentralventilgehäuse 23 gehalten. Die Rundstange 33 des Zentralventils ragt in die Behälteranschlußbohrung 44. Auf diese Weise kann von außen der Leerweg des Zentralventils durch Verdrehen der Rundstange eingestellt werden. Das Zentralventil besteht weiterhin aus einem Ventilträger, der auf der Rundstange 33 aufgepresst angeordnet ist. Der Ventilträger 34 ist mit einem Ventilkörper 35 umgeben.

In jeden Kolben des Twinhauptzylinders ist ein Gewindestück 36 angeordnet und zwar verdrehsicher, aber gleichzeitig in axialer Richtung verschiebbar. Die Rundstange ist im Gewindestück eingeschraubt, so daß durch Verdrehen der Rundstange das Gewindestück in axialer Richtung bewegt wird. Dadurch ist bei fertig montiertem Gerät eine Leerwegeinstellung möglich. Mit 119 ist ein Anschlag für das Gewindestück bezeichnet. Der Anschlag ist mit dem Kolben des Hauptzylinders verbunden. Wird der Kolben nach rechts bewegt (Lösen der Bremse), dann öffnet das Zentralventil, das heißt der Ventilkörper 35 hebt ab, so daß Bremsflüssigkeit nachlaufen kann.

Der Bremsflüssigkeitsbehälteranschlußstutzen 42 ist am Twinhauptzylinder befestigt. Es kann vorgesehen werden, daß an dieser Stelle eine Behälterwarnanzeige eingebaut wird.

Es ist möglich, anstelle des Twinhauptzylinders einen konventionellen Tandemhauptzylinder mit dem Bremskraftverstärker zu kombinieren.

Wie bereits erwähnt, ist der Pedalbock 26 auf einem Außengehäuseteil 27 angebracht. Das Außengehäuseteil 27 umgibt teilweise das Verstärkergehäuse. Das Außengehäuseteil weist Laschen für die Befestigung des Bremskraftverstärkers an der Motorspritzwand auf.

Der Pedalbock kann, wie erwähnt, universal verwendet werden. Er kann so ausgeführt werden, daß er den Bremslichtschalter 28 und den Kupplungsgeber 38 trägt. Der Kupplungsgeber 38 kann auch direkt am Zylinderteil 1 des Bremskraftverstärkers mittels eines nicht dargestellten Halteblechs befestigt werden.

Über ein Druckstück 30 ist das Bremspedal durch eine Feder 32 spielfrei mit dem Betätigungskolben 13 verbunden.

Figur 8 zeigt in einer Ansicht vom Fahrgastraum des Fahrzeugs in Richtung Spritzwand die Pedalerie. Sie umfaßt das Bremspedal 8 und das Kupplungspedal 11, das auf den Kupplungsgeberzylinder 38 wirkt. Die ovale Form des Steuergehäuses ist mit 31 bezeichnet. Der aus der Zeichnungsebene nach oben ragende Pedalbock ist gestrichelt dargestellt und mit 26 bezeichnet. Er ist auf einer Platte, die ebenfalls gestrichelt dargestellt ist, und das Bezugszeichen 120 trägt, befestigt. Die Platte selbst ist am Außengehäuseteil 27 des Bremskraftverstärkers angebracht.

In den Figuren 9 und 14 sind in einem größeren Maßstab die wesentlichen Teile des Bremskraftverstärkers, insbesondere des Vakuumsteuerventils dargestellt. Es werden für die gleichen Teile die gleichen Bezugsziffern wie in den Figuren 5 bis 8 verwendet, so daß auf die Beschreibung dieser Figuren Bezug genommen werden kann.

Das Steuergehäuse ist in Figur 9 geschnitten wiedergegeben. Die Schnittfläche ist großkariert gekennzeichnet. Der Rollmembranträger ist ebenfalls geschnitten dargestellt und zeigt eine kleinkarierte Schraffur. Das Hebelelement ist schraffiert dargestellt.

Es ist erkennbar, daß der Spannstift über das Hebelelement mit dem tellerförmigen Ventilschließkörper des Vakuumsteuerventils verbunden ist. Mit 121 ist die Rollmembran des pneumatischen Servokolbens, beziehungsweise des Membrantellers, bezeichnet. Der Membranteller trägt die Bezugsziffer 18. Das Gehäuseteil ist mit 2 bezeichnet, das Zylinderteil ist mit 1 gekennzeichnet. Die Abdichtung des Steuergehäuses erfolgt mit Hilfe der Rollmembran 50. Die Abdichtung des Rohrs 5 wird mit Hilfe der Rollmembran 41 durchgeführt.

Aus Figur 14 kann insbesondere der Aufbau und die Funktionsweise des Vakuumsteuerventils, wie sie weiter oben beschrieben wurden, entnommen werden. Die Gesamtheit des Vakuumsteuerventils ist mit 10 bezeichnet. Das Hebelelement trägt die Bezugsziffer 12; der Spannstift trägt die Bezugsziffer 14. Die Bezugsziffer 6 für das Gehäuse des Steuerventils ist wegen der stark gegliederten Ausbildung in Figur 14 mehrfach eingetragen worden, damit man die Konfiguration des Gehäuses 6 deutlich erkennt. Das Gehäuse 6 ist in Figur 14 ebenfalls kariert dargestellt.

Der Bremskraftverstärker nach Figur 12 ist mit einem konventionellen Tandemhauptzylinder ausgerüstet. Die Teile der Figur 12, die im Zusammenhang mit den Figuren 5 bis 8 beschrieben wurden, tragen die gleichen Bezugsziffern wie in sie in diesen letztgenannten Figuren benutzt wurden.

In Figur 12 ist erkennbar, daß zusätzlich zum Gehäuseteil 2 und zum Zylinderteil 1 ein Außengehäuseteil 27 vorgesehen ist. Auf dem Außengehäuseteil 27 ist der Pedalbock 26 befestigt.

Im Bereich 122 sind Außengehäuseteil und die Flansche des Gehäuseteils und des Zylinderteils formschlüssig miteinander verbunden.

Aus Figur 13 ist ein Ausführungsbeispiel des Bremskraftverstärkers erkennbar, bei dem die Tandembauweise des Vakuumservoteils angewendet wird. Die Tandembauweise ist Stand der Technik, siehe zur weiteren Erläuterung hierzu das oben zitierte Bremsenhandbuch.

Die Besonderheiten des Ausführungsbeispiels gemäß Figur 13 werden nachfolgend beschrieben:

Die Entlüftung des Raums 48, der zwischen Membranteller 18 und Zwischenboden 46 angeordnet ist, erfolgt durch einen Kanal 47 im Steuergehäuse 6. Der Kanal 47 wird mit einem Dichtelement 123 am Membranteller abgedichtet.

Der Raum 49, der zwischen dem Membranteller 18 und der zur Membranteller gehörenden Rollmembran 124 einerseits und dem Zylinderteil 1 des Verstärkergehäuses andererseits angeordnet ist, wird durch den Schlitz 54, in dem sich der Hebel 12 befindet, belüftet.

Belüften heißt hier: Aufbau des atmosphärischen Drucks im Raum 49, Beginn der Servowirkung des Bremskraftverstärkers. Entlüften heißt Evakuieren.

Der motorraumseitig angeordnete Membranteller 125 sitzt auf einem umlaufenden Absatz 126 des Steuergehäuses. Der Membranteller wird an diesem Absatz an mehreren Stellen fixiert.

### Liste der Einzelteile

- 1: Zylinderteil, Vakuumzylinder
- 2: Gehäuseteil, Gehäuse
- 3: Hauptzylinder, Twinzylinderaggregat, Twinhauptzylinder
- 4: Rückstellfeder
- 5: Außenluftrohr, Rohrelement
- 6: Gehäuse des Steuerventils
- 7: Rollmembranträger
- 8: Bremspedal
- 9: Reaktionsscheibe
- 10: Tellerventil, Vakuumsteuerventil
- 11: Kupplungspedal
- 12: Hebelelement, Betätigungselement
- 13: Betätigungskolben
- 14: Spannstift
- 15: Pedalrückholfeder
- 16: Ventilkolben, tellerförmiger Ventilschließkörper
- 17: Ring
- 18: Membranteller
- 19: Zylinderlaufbuchse
- 20: Differenzdruckkolben
- 21: Anschlußgewindeschraube
- 22: Nachsaugmanschette
- 23: Zentralventilgehäuse
- 24: Ventilsitz des Tellerventils
- 25: Zylinderlaufbuchse
- 26: Pedalbock
- 27: Blechgehäuse, Außengehäuseteil
- 28: Bremslichtschalter
- 29: Nut
- 30: Druckstück
- 31: elliptische Öffnung
- 32: Feder
- 33: Rundstange
- 34: Ventilträger
- 35: Ventilkörper
- 36: Gewindestück
- 37: Boden
- 38: Kupplungsgeberzylinder
- 39: Vakuumanschluß
- 40: Führung, Führungselement
- 41: Außenluftrollmembran
- 42: Behälteranschlußstutzen
- 43: Hauptzylinderbohrung
- 44: Bohrung
- 45: Hauptzylinderkolben
- 46: Zwischenboden
- 47: Kanal
- 48: Unterdruckraum
- 49: Druckraum
- 50: Rollmembranelement
- 51: Ausgleichskolbenzylindereinheit, Differenzdruckkolbeneinheit
- 52: Zylinder
- 53: Zylinder
- 54: Ausnehmung
- 55: Twinhauptzylinder
- 56: Zylinderbohrung
- 57: Zylinderbohrung
- 58: Kolben
- 59: Kolben
- 60: Bremspedal
- 61: Druckorgan
- 62: Druckstück
- 63: Pfeil
- 64: Reaktionsscheibe
- 65: Organ
- 66: Teil
- 67: Teil
- 68: Kanal
- 69: Kanal
- 70: Druckraum
- 71: Druckraum
- 72: Ausgleichskolbenzylindereinheit
- 73: Kolben
- 74: Betätigungskreis
- 75: Betätigungskreis
- 76: Leitung
- 77: Leitung
- 78: Leitung
- 79: Vorratsbehälter
- 80: Vorratsbehälter
- 81: Vakuumsteuerventil
- 82: Pfeil
- 83: Filter
- 84: Balg
- 85: Druckraum
- 86: Servoblechkolben
- 87: Pfeil
- 88: Öffnung
- 89: Öffnung
- 90: Unterdruckraum
- 91: Organ
- 92: Gehäuse
- 93: Bock
- 94: Achse
- 95: Druckstangenkolben
- 96: Schwimmkolben
- 97: Betätigungskreis
- 98: Betätigungskreis
- 99: Bremspedal
- 100: Kupplungspedal
- 101: Kupplungsgeberzylinder
- 102: Verstärkergehäuse
- 103: Einprägung
- 104: Lasche
- 105: Lasche
- 106: Spritzwand
- 107: Schraubenbolzen
- 108: Schraubenbolzen
- 109: Pfeil
- 110: Querschnitt
- 111: Einprägung
- 113: Kunststoffteil
- 114: Achse
- 115: Aachse
- 116: Achse
- 117: Bohrung
- 118: Anschlußgewindeschraube
- 119: Anschlag
- 120: Platte
- 121: Rollmembran
- 122: Bereich
- 123: Dichtelement
- 124: Rollmembran
- 125: Membranteller
- 126: Absatz
- 127: Spritzwand
- K: Öffnungsmaß
- Z: Z-Maß

## Patentansprüche

1. Pneumatischer Bremskraftverstärker, vorzugsweise Vakuum-Bremskraftverstärker, für fluide, insbesondere hydraulische, Bremssysteme von Kraftfahrzeugen, der als Tragelement (26) für mindestens ein Bedienungsorgan, vorzugsweise für das Bremspedal (8), des Fahrzeugs ausgebildet ist, **gekennzeichnet** durch die Kombination folgender Merkmale:
das pneumatische Steuerventil (10) des Bremskraftverstärkers, vorzugsweise das Vakuumsteuerventil, ist seitlich neben dem Hauptzylinder (3) des Bremskraftverstärkers, insbesondere parallel zum Hauptzylinder (3) angeordnet, wobei die als Verstärkermedium dienende Luft, insbesondere die Außenluft mit atmosphärischem Druck, aus dem Motorraum des Fahrzeugs durch den Bremskraftverstärker in dessen pneumatischen, beziehungsweise pneumatische Druckräume geführt wird.

2. Bremskraftverstärker nach Anspruch 1, dadurch **gekennzeichnet**, daß er zusammen mit dem an ihm befestigten Bedienungsorgan, beziehungsweise Bedienungsorganen, vorzugsweise Bremspedal, als eine Einheit vom Innenraum (Fahrgastraum) des Fahrzeugs her an die Spritzwand des Fahrzeugs anbringbar und anschließend vom Motorraum aus verschraubbar, beziehungsweise mit anderen Mitteln befestigbar, ausgestaltet ist.

3. Bremskraftverstärker nach Anspruch 1 und/oder 2, dadurch **gekennzeichnet**, daß das Gehäuse (6) des Steuerventils (Steuergehäuse) mittels eines Rollmembranelements (50) mittelbar oder unmittelbar am Verstärkergehäuse abgedichtet angeordnet ist.

4. Bremskraftverstärker nach nach einem oder mehreren der vorangegangenen Ansprüche, dadurch **gekennzeichnet**, daß der Hauptzylinder als Twinzylinderaggregat (3) ausgestaltet ist, daß eine hydraulische Ausgleichskolbenzylindereinheit (51) vorgesehen ist für den Druckausgleich zwischen den beiden Zylindern (52, 53) des Twinzylinderaggregats (3).

5. Bremskraftverstärker nach einem oder mehreren der vorangegangenen Ansprüche, dadurch **gekennzeichnet**, daß er als Tragelement für das Kupplungspedal (11) und den Kupplungsgeberzylinder (38) ausgebildet ist.

6. Bremskraftverstärker nach einem oder mehreren der vorangegangenen Ansprüche, dadurch **gekennzeichnet**, daß das Bremspedal (8) und das Kupplungspedal (11) nebeneinander und in Hinsicht auf ihre Schwenkachsen koaxial angeordnet sind.

7. Bremskraftverstärker nach einem oder mehreren der vorangegangenen Ansprüche, dadurch **gekennzeichnet**, daß der Bremslichtschalter (28) am Bremskraftverstärker, vorzugsweise an am Bremskraftverstärker angeordneten Pedalbock (26) für das Bremspedal (8), angebracht ist.

8. Bremskraftverstärker nach einem oder mehreren der vorangegangenen Ansprüche, dadurch **gekennzeichnet**, daß er Tragelement für die Bremswarneinrichtung ist.

9. Bremskraftverstärker nach einem oder mehreren der vorangegangenen Ansprüche, dadurch **gekennzeichnet**, daß ein Betätigungselement, insbesondere ein Hebelelement (12), zwischen dem Spannstift (14) des Bremskraftverstärkers und dem Schließkörper (16) des Vakuumsteuerventils angeordnet ist, das zur Bewegung des Schließkörpers (16), zur optimalen Einstellung des Leerwegs des Schließkörpers (16) und/oder zur Einstellung des an sich bekannten Springereffekts des Verstärkers dient.

10. Bremskraftverstärker nach einem oder mehreren der vorangegangenen Ansprüche, dadurch **gekennzeichnet**, daß das Verstärkergehäuse aus dem motorraumseitig angeordneten Gehäuseteil (2) und dem innenraumseitig angeordneten Zylinderteil (1) besteht, daß als Führungsorgan für die Außenluft oder Druckluft ein Rohrelement (5) vorgesehen ist, das durch eine Außenluftrollmembran (41) mit dem Gehäuseteil (2) des Verstärkers abdichtend verbunden ist.

11. Bremskraftverstärker nach einem oder mehreren der vorangegangenen Ansprüche, dadurch **gekennzeichnet**, daß der einen Kunststoffmantel aufweisende Hauptzylinder (3) am Gehäuseteil (2) angespritzt angeordnet ist.

12. Bremskraftverstärker nach einem oder mehreren der vorangegangenen Ansprüche, dadurch **gekennzeichnet**, daß ein aus Kunststoff bestehendes Führungselement (40) für die Außenluftrollmembran (41) am Gehäuseteil (2) angespritzt angeordnet ist.

13. Bremskraftverstärker nach einem oder mehreren der vorangegangenen Ansprüche, dadurch **gekennzeichnet**, daß der aus Kunststoff bestehende Vakuumanschluß (39) des Verstärkers am Gehäuseteil (2) angespritzt angeordnet ist.

14. Bremskraftverstärker nach einem oder mehreren der vorangegangenen Ansprüche, dadurch **gekennzeichnet**, daß das Gehäuseteil (2) Einprägungen für die Aufnahme von Rückstellfedern (4) für den pneumatischen Servokolben aufweist, daß insbesondere drei Rückstellfedern (4) vorgesehen sind, die auf einem Teilungskreis um 120 Winkelgrade zueinander versetzt angeordnet sind.

15. Bremskraftverstärker nach einem oder mehreren der vorangegangenen Ansprüche, dadurch **gekennzeichnet**, daß der Bremskraftverstärker eine oder mehrere Laschen oder Flansche zur Befestigung an der Motorspritzwand aufweist.

16. Bremskraftverstarker nach einem oder mehreren der vorangegangenen Ansprüche, der mit einem Hauptzylinder ausgerüstet ist, der als Twinzylinderaggregat ausgebildet ist, dadurch **gekennzeichnet**, daß der Zylinderteil (1) des Bremskraftverstärkergehäuses eine elliptische Öffnung (31) mit Führungsfläche und Anschlag für das Steuergehäuse aufweist.

17. Bremskraftverstärker nach einem oder mehreren der vorangegangenen Ansprüche, dadurch **gekennzeichnet**, daß im Zylinderteil (1) ein Steuergehäuserollmembranträger (7) vakuumdicht eingepresst ist.

18. Bremskraftverstärker nach einem oder mehreren der vorangegangenen Ansprüche, dadurch **gekennzeichnet**, daß der Steuergehäuserollmembranträger (7) eine Ausnehmung, insbesondere einen Schlitz aufweist, um die Freigängigkeit des Bremspedals (8) zu gewährleisten.

19. Bremskraftverstärker nach einem oder mehreren der vorangegangenen Ansprüche, dadurch **gekennzeichnet**, daß der Zylinderteil (1) und der Gehäuseteil (2) mit je einem Flansch versehen ist, daß die Flansche so ausgebildet sind, daß eine Zentrierung zwischen Steuergehäuse (6) und Hauptzylinder (3) erzielt wird.

20. Bremskraftverstärker nach einem oder mehreren der vorangegangenen Ansprüche, dadurch **gekennzeichnet**, daß die Flansche des Zylinderteils (1) einerseits und des Gehäuseteils (2) andererseits so ausgebildet sind, daß Zylinderteil und Gehäuseteil vor dem Zusammenbau zueinander zentriert werden und daß anschließend eine formschlüssige Verbindung des Zylinderteils und des Gehäuseteils, beispielsweise durch Umbördelung, hergestellt werden kann.

21. Bremskraftverstärker nach einem oder mehreren der vorangegangenen Ansprüche, dadurch **gekennzeichnet**, daß das "Öffnungsmaß K" des tellerförmigen Ventilschließkörpers (16) des Vakuumsteuerventils in Hinsicht auf den Ventilsitz (24) des Vakuumsteuerventils (10), das zur Leerwegverkürzung dient, und das "Z-Maß", das zur Einstellung des an sich bekannten Springereffekts dient, nach Anlegen des Steuergehäuses (6) an den Zylinderteil (1) des Gehäuses des Bremskraftverstärkers durch Aufsetzen des Hebelelements (12) an den Zylinderteil (1) eingestellt werden.

22. Bremskraftverstärker nach einem oder mehreren der vorangegangenen Ansprüche, dadurch **gekennzeichnet**, daß ein Spannstift (14) vorgesehen ist, der in einem Langloch im Steuergehäuse (6) bewegbar angeordnet ist, daß Langloch und Spannstift eine Wegbegrenzung des Betätigungskolbens (13) beim Lösen und Betätigen der Bremse bilden.

23. Bremskraftverstärker nach einem oder mehreren der vorangegangenen Ansprüche, der mit einem Hauptzylinder ausgerüstet ist, der als Twinzylinderaggregat ausgestaltet ist, dadurch **gekennzeichnet**, daß das vakuumseitige Ende des aus Kunststoff bestehenden Steuergehäuses (6) mit einer ovalen Bohrung zur Aufnahme des Twinzylinderaggregats (3) versehen ist, das die Bohrung durch einen Metallring (17), insbesondere Stahlring, verstärkt ist, der insbesondere vom Twinzylinderaggregat herrührende Biegekräfte aufnimmt, die bei Ausfall eines Zylinders (52, 53) des Twinzylinderaggregats auftreten.

24. Bremskraftverstärker nach einem oder mehreren der vorangegangenen Ansprüche, dadurch **gekennzeichnet**, daß das Außenluftrohr (5) bei einem aufgeladenen Bremskraftverstärker als pneumatische Druckleitung ausgebildet ist.

25. Bremskraftverstärker nach einem oder mehreren der vorangegangenen Ansprüche, dadurch **gekennzeichnet**, daß im Membranteller (18) des Bremskraftverstärkers Einprägungen zur Aufnahme der Rückstellfedern (4) vorgesehen sind, daß die Ausprägungen auf einem Teilungskreis um 120 Winkelgrade versetzt zueinander angeordnet sind.

26. Bremskraftverstärker nach einem oder mehreren der vorangegangenen Ansprüche, dadurch **gekennzeichnet**, daß das Twinzylinderaggregat (3) aus zwei mit Kunststoff umspritzten Zylinderlaufbuchsen (19, 25) und einer über den Zylinderlaufbuchsen und zu den Zylinderlaufbuchsen rechtwinklig angeordneten Differenzdruckkolbeneinheit (51) besteht.

27. Bremskraftverstärker nach einem oder mehreren der vorangegangenen Ansprüche, dadurch **gekennzeichnet**, daß eine Bremsflüssigkeitsnachlaufvorrichtung, die ein Zentralventilaggregat umfasst, vorgesehen ist, die eine Nachsaugmanschette (22) aufweist, die in einer Nut (29) im Boden (37) der Hauptzylinderbohrung (43) von einem Zentralventilgehäuse (23) gehalten wird, die eine Rundstange (33) aufweist, die in die Bremsflüssigkeitsbehälteranschlußbohrung (44) ragt und von außen, den Leerweg einstellend, betätigbar ist, die einen Ventilträger (34) aufweist, der auf die Rundstange (33) aufgepresst ist, die einen Ventilkörper (35) aufweist, der den Ventilträger (34) zumindest teilweise umgibt, die ein Gewindestück (36) aufweist, das verdrehsicher und axial verschiebbar im Hauptzylinderkolben (45) untergebracht ist, wobei in das Gewindestück (36) die Rundstange (33) einschraubbar angeordnet ist.

28. Bremskraftverstärker nach einem oder mehreren der vorangegangenen Ansprüche, dadurch **gekennzeichnet**, daß fahrzeuginnenraumseitig ein Außengehäuseteil (27) angeordnet ist, das zumindest teilweise den Zylinderteil (1) des Verstärkergehäuses umgibt, das formschlüssig mit dem Verstärkergehäuse verbunden ist, und auf dem ein Pedalbock (26) befestigt ist.

29. Bremskraftverstärker nach einem oder mehreren der vorangegangenen Ansprüche, dadurch **gekennzeichnet**, daß am Pedalbock (26) Bremspedal (8), Kupplungspedal (11), Bremslichtschalter (28) und/oder Kupplungsgeber (38) angeordnet sind.

30. Bremskraftverstärker nach einem oder mehreren der vorangegangenen Ansprüche, dessen pneumatischer Servoteil in Tandembauweise ausgebildet ist, dadurch **gekennzeichnet**, daß der Zwischenboden (46) des Tandemservoteils einen Dichtring mit Führung aufweist, der einen Anschlag für das Steuergehäuse (6) darstellt.

31. Bremskraftverstärker nach einem oder mehreren der vorangegangenen Ansprüche, dessen pneumatischer Servoteil in Tandembauweise ausgebildet ist, dadurch **gekennzeichnet**, daß der Zwischenboden (46) mit einem Flansch versehen ist, daß die Flansche des Zwischenbodens, des Zylinderteils (1) und des Gehäuseteils (2) des Verstärkergehäuses so ausgebildet sind, daß beim Zusammenbau eine Zentrierung und eine anschließende formschlüssige Verbindung, zum Beispiel Umbördelung, durchführbar sind.

32. Bremskraftverstärker nach einem oder mehreren der vorangegangenen Ansprüche, dessen pneumatischer Servoteil in Tandembauweise ausgebildet ist, dadurch **gekennzeichnet**, daß das Steuergehäuse (6) mit einem Kanal (47) versehen ist, durch den der fahrzeuginnenraumseitige Unterdruckraum (48) des Bremskraftverstärkers entlüftet wird.

33. Bremskraftverstärker nach einem oder mehreren der vorangegangenen Ansprüche, dessen pneumatischer Servoteil in Tandembauweise ausgebildet ist, dadurch **gekennzeichnet**, daß der fahrzeuginnenseitig angeordnete Druckraum (49) des Bremskraftverstärkers durch die Ausnehmung (54), beziehungsweise den Schlitz, in dem sich das Hebelelement (12) bewegt, belüftet wird.

34. Bremskraftverstärker nach einem oder mehreren der vorangegangenen Ansprüche, dadurch **gekennzeichnet**, daß zur Positionierung der Rückstellfedern (4) für den Membranteller am Membranteller anliegend ein ringförmiges Kunststoffteil (113) vorgesehen ist.

35. Bremskraftverstärker nach einem oder mehreren der vorangegangenen Ansprüche, dadurch **gekennzeichnet**, daß das Verstärkergehäuse aus dem motorraumseitig angeordneten Gehäuseteil (2) und dem innenraumseitig angeordneten Zylinderteil (1) besteht, daß als Führungsorgan für die Außenluft oder Druckluft ein Rohrelement (5) vorgesehen ist, das durch eine Außenluftrollmembran (41) mit dem Gehäuseteil (2) des Verstärkers abdichtend verbunden ist.

## Claims

1. A pneumatic brake power booster, preferably a vacuum brake power booster, for fluidic, in particular hydraulic, brake systems of automotive vehicles, which is provided as a carrier element (26) of at least one operating member of the vehicle, preferably of the brake pedal (8),
**characterized** by the combination of the following features: the pneumatic control valve (10) of the brake power booster, preferably the vacuum control valve, is positioned at the side of the master cylinder (3) of the brake power booster, in particular in parallel to the master cylinder (3), the air serving as boosting medium, in particular the ambient air at atmospheric pressure, being conveyed from the engine compartment of the vehicle through the brake power booster into the latter's pneumatic pressure chamber or, respectively, pressure chambers.

2. A brake power booster as claimed in claim 1,
**characterized** in that jointly with the operating member or, respectively, operating members, preferably jointly with the brake pedal, fixed to it, the brake power booster is provided so as to be securable to the splash shield of the vehicle as one unit from the side of the interior space (passenger compartment) of the vehicle and to be subsequently screwable or boltable or fixable by other means from the side of the engine compartment.

3. A brake power booster as claimed in claim 1 and/or claim 2,
**characterized** in that the housing (6) of the control valve (control housing) is arranged such as to be sealed directly or indirectly at the booster housing by means of a rolling diaphragm element (50).

4. A brake power booster as claimed in any one or in several of the preceding claims,
**characterized** in that the master cylinder is provided as a twin cylinder assembly (3), and in that a hydraulic equalizer piston-and-cylinder unit (51) is provided for the pressure compensation between the two cylinders (52, 53) of the twin cylinder assembly (3).

5. A brake power booster as claimed in any one or in several of the preceding claims,
**characterized** in that it is provided as a carrier element for the clutch pedal (11) and the clutch master cylinder (38).

6. A brake power booster as claimed in any one or in several of the preceding claims,
**characterized** in that the brake pedal (8) and the clutch pedal (11) are disposed one aside the other and coaxially in respect of their swivelling axes.

7. A brake power booster as claimed in any one or in several of the preceding claims,
**characterized** in that the stoplight switch (28) is secured to the brake power booster, preferably to the pedal pedestal (26) for the brake pedal (8), which pedal pedestal is positioned at the brake power booster.

8. A brake power booster as claimed in any one or in several of the preceding claims,
**characterized** in that it is a carrier element for the brake warning device.

9. A brake power booster as claimed in any one or in several of the preceding claims,
**characterized** in that an actuating element, in particular a lever element (12), is positioned between the dowel pin (14) of the brake power booster and the closing element (16) of the vacuum control valve, which actuating element serves to move the closing element (16), to optimize the adjustment of the idle travel of the closing element (16) and/or to adjust the state-of-the-art jumper effect of the booster.

10. A brake power booster as claimed in any one or in several of the preceding claims,
**characterized** in that the booster housing is composed of the housing section (2) arranged on the side of the engine compartment and the cylinder section (1) arranged on the side of the interior space, and in that as a guide member for the atmosphere or the compressed air a tubular element (5) is provided which is sealingly coupled to the housing section (2) of the booster through an atmosphere rolling diaphragm (41).

11. A brake power booster as claimed in any one or in several of the preceding claims,
**characterized** in that the master cylinder (3) being provided with a plastic material shell is moulded to the housing section (2).

12. A brake power booster as claimed in any one or in several of the preceding claims,
**characterized** in that a guide element (40) made of plastic material and serving for the atmosphere rolling diaphragm (41) is moulded to the housing section (2).

13. A brake power booster as claimed in any one or in several of the preceding claims,
**characterized** in that the vacuum connection (39) of the booster made of plastic material is moulded to the housing section (2).

14. A brake power booster as claimed in any one or in several of the preceding claims,
**characterized** in that the housing section (2) is furnished with depressions for the accommodation of return springs (4) for the pneumatic servo piston, and in that, in particular, three return springs (4) are provided which are arranged offset 120 angular degrees in respect of one another on a pitch circle.

15. A brake power booster as claimed in any one or in several of the preceding claims,
**characterized** in that the brake power booster is provided with one or a plurality of brackets or flanges for fixation to the splash shield of the engine compartment.

16. A brake power booster as claimed in any one or in several of the preceding claims, being equipped with a master cylinder which is designed as a twin cylinder assembly,
**characterized** in that the cylinder section (1) of the brake power booster housing is formed with an elliptical opening (31) presenting a guide surface and a stop for the control housing.

17. A brake power booster as claimed in any one or in several of the preceding claims,
**characterized** in that a control housing rolling diaphragm carrier (7) is pressed into the cylinder section (1) in a vacuum-tight manner.

18. A brake power booster as claimed in any one or in several of the preceding claims,
**characterized** in that the control housing rolling diaphragm carrier (7) is furnished with a recess, in particular with a slot, in order to ensure free movement of the brake pedal (8).

19. A brake power booster as claimed in any one or in several of the preceding claims,
**characterized** in that the cylinder section (1) and the housing section (2) are provided with a flange each, and in that the flanges have such a configuration that a centering is achieved between the control housing (6) and the master cylinder (3).

20. A brake power booster as claimed in any one or in several of the preceding claims,
**characterized** in that the flanges of the cylinder section (1), on the one hand, and the housing section (2), on the other hand, have such a configuration that the cylinder section and the housing section are centered in respect of each other before the assembly, and in that, subsequently, a positive locking-type connection of the cylinder section and the housing section can be realized, for example by beading.

21. A brake power booster as claimed in any one or in several of the preceding claims,
**characterized** in that the "measure of opening K" of the disc-shaped closing member (16) of the vacuum control valve in respect of the valve seat (24) of the vacuum control valve (10), which measure serves to reduce the idle travel, and the "measure Z", which serves to adjust the jumper effect being as such known in prior art, are adjusted after abutment of the control housing (6) against the cylinder section (1) of the housing of the brake power booster, by setting the lever element (12) onto the cylinder section (1).

22. A brake power booster as claimed in any one or in several of the preceding claims,
**characterized** in that a dowel pin (14) is provided which is arranged such as to be movable in an oblong hole in the control housing (6), and in that the oblong hole and the dowel pin constitute a limitation of travel of the actuating piston (13) in the event of the release and the actuation of the brake.

23. A brake power booster as claimed in any one or in several of the preceding claims, being equipped with a master cylinder which is designed as a twin cylinder assembly,
**characterized** in that the vacuum-side end of the control housing (6) made of plastic material is furnished with an oval bore for the accommodation of the twin cylinder assembly (3), and in that the bore is reinforced by a metal ring (17), in particular by a steel ring, which absorbs bending forces originating, in particular, from the twin cylinder assembly and occurring in the event of failure of one cylinder (52, 53) of the twin cylinder assembly.

24. A brake power booster as claimed in any one or in several of the preceding claims,
**characterized** in that in a charged booster the atmosphere pipe (5) is provided as a pneumatic pressure line.

25. A brake power booster as claimed in any one or in several of the preceding claims,
**characterized** in that impressions for the accommodation of the return springs (4) are provided in the diaphragm retainer (18) of the brake power booster, and in that the impressions are arranged offset 120 angular degrees in respect of one another on a pitch circle.

26. A brake power booster as claimed in any one or in several of the preceding claims,
**characterized** in that the twin cylinder assembly (3) is comprised of two plastic-coated cylinder bushings (19, 25) and a differential pressure piston unit (51) being arranged above the cylinder bushings and at right angles to the cylinder bushings.

27. A brake power booster as claimed in any one or in several of the preceding claims,
**characterized** in that a brake fluid intake device comprising a central valve assembly is provided, which brake fluid intake device is furnished with an intake cup (22) being retained in a groove (29) in the bottom (37) of the master cylinder bore (43) by a central valve housing (23), which is furnished with a round rod (33) projecting into the connecting bore (44) of the brake fluid reservoir and being actuatable from the outside so adjusting the idle travel, which is furnished with a valve carrier (34) being pressed onto the round rod (33), with a valve body (35) at least partly surrounding the valve carrier (34), presents a threaded coupling element (36) being anti-rotatingly and axially slidably accommodated within the master clyinder piston (45), the round rod (33) being disposed such as to be screwable into the threaded coupling element (36).

28. A brake power booster as claimed in any one or in several of the preceding claims,
**characterized** in that on the side of the passenger compartment of the vehicle, an outside housing section (27) is disposed, which, at least partly, surrounds the cylinder section (1) of the booster housing, which is coupled to the booster housing in a positive locking fit, and to which a pedal pedestal (26) is fixed.

29. A brake power booster as claimed in any one or in several of the preceding claims,
**characterized** in that the brake pedal (8), the clutch pedal (11), the stoplight switch (28) and/or the clutch master cylinder (38) are positioned at the pedal pedestal (26).

30. A brake power booster as claimed in any one or in several of the preceding claims, whose pneumatic servo section is of tandem-type design,
**characterized** in that the intermediate bottom (46) of the tandem servo section is provided with a sealing ring with a guide which constitutes a stop for the control housing (6).

31. A brake power booster as claimed in any one or in several of the preceding claims, whose pneumatic servo section is of tandem-type design,
**characterized** in that the intermediate bottom (46) is furnished with a flange, and in that the flanges of the intermediate bottom, the cylinder section (1), and the housing section (2) of the booster housing are configurated such as to allow during the assembly to carry out a centering and a subsequent positive locking-type coupling, for example, a beading.

32. A brake power booster as claimed in any one or in several of the preceding claims, whose pneumatic servo section is of tandem-type design,
**characterized** in that the control housing (6) is provided with a duct (47), through which the vacuum chamber (48) of the brake power booster being positioned on the side of the passenger compartment of the vehicle is evacuated.

33. A brake power booster as claimed in any one or in several of the preceding claims, whose pneumatic servo section is of tandem-type design,
**characterized** in that the pressure chamber (49) of the brake power booster being positioned on the side of the vehicle's interior is aerated through the recess (54), respectively, through the slot in which the lever element (12) moves.

34. A brake power booster as claimed in any one or in several of the preceding claims,
**characterized** in that a ring-shaped plastic material component (113) which is in abutment with the diaphragm retainer is provided to position the return springs (4) of the diaphragm retainer.

35. A brake power booster as claimed in any one or in several of the preceding claims,
**characterized** in that the booster housing is comprised of the housing section (2) being positioned on the side of the engine compartment and the cylinder section (1) being positioned on the side of the passenger compartment, and in that a tubular element (5) is provided as a guide member for the atmosphere or the compressed air, which tubular element is sealingly coupled to the housing section (2) of the booster through an atmosphere rolling diaphragm (41).

## Revendications

1. Amplificateur pneumatique d'effort de freinage, de préférence amplificateur d'effort de freinage à dépression, pour un système de freinage par fluide, notamment un système hydraulique de freinage, pour véhicule automobile, qui est agencé en tant qu'élément de support (26) pour au moins un organe d'actionnement, de préférence la pédale de frein (8), du véhicule, caractérisé par la combinaison de particularités suivantes :
la valve pneumatique de commande (10) de l'amplificateur d'effort de freinage, de préférence la valve de commande de dépression, est disposée transversalement à côté du maître-cylindre (3) de l'amplificateur d'effort de freinage, notamment d'une manière parallèle au maître-cylindre (3), l'air qui sert de fluide pour l'amplificateur, notamment l'air extérieur à la pression atmosphérique, étant dirigé dans l'amplificateur d'effort de freinage à partir du compartiment moteur du véhicule, de façon à parvenir dans une chambre pneumatique de pression ou des chambres pneumatiques de pression de l'amplificateur d'effort de freinage.

2. Amplificateur d'effort de freinage selon la revendication 1, caractérisé en ce qu'il est agencé de façon à pouvoir être monté, avec l'organe de manoeuvre ou les organes de manoeuvre fixés sur lui, de préférence la pédale de frein, en formant un ensemble unitaire, sur le tablier de la carrosserie du véhicule à partir du compartiment intérieur (habitacle) du véhicule et à pouvoir ensuite être fixé par vissage, ou fixé à l'aide d'autres moyens, à partir du compartiment moteur.

3. Amplificateur d'effort de freinage selon l'une des revendications 1 et 2, caractérisé en ce que le boîtier (6) de la valve de commande (boîtier de commande) est disposé d'une manière étanche sur le boîtier de l'amplificateur, soit directement, soit indirectement par l'intermédiaire d'un élément à membrane à déroulement (50).

4. Amplificateur d'effort de freinage selon une ou plusieurs des revendications précédentes, caractérisé en ce que le maître-cylindre est réalisé sous la forme d'un ensemble à cylindres jumelés (3) et en ce qu'un vérin hydraulique d'équilibrage (51) est prévu pour l'équilibrage de pression entre les deux cylindres (52, 53) de l'ensemble à cylindres jumelés (3).

5. Amplificateur d'effort de freinage selon une ou plusieurs des revendications précédentes, caractérisé en ce qu'il est réalisé sous la forme d'un élément de support pour la pédale d'embrayage (11) et le cylindre générateur d'embrayage (38).

6. Amplificateur d'effort de freinage selon une ou plusieurs des revendications précédentes, caractérisé en ce que la pédale de frein (8) et la pédale d'embrayage (11) sont disposées l'une à côté de l'autre et suivant le même axe en ce qui concerne leurs axes de pivotement.

7. Amplificateur d'effort de freinage selon une ou plusieurs des revendications précédentes, caractérisé en ce que le contacteur de feux stop (28) est monté sur l'amplificateur d'effort de freinage, de préférence sur le support de pédale (26) qui est prévu pour la pédale de frein (8) et qui est disposé sur l'amplificateur d'effort de freinage.

8. Amplificateur d'effort de freinage selon une ou plusieurs des revendications précédentes, caractérisé en ce qu'il constitue un élément de support pour le dispositif de feux stop.

9. Amplificateur d'effort de freinage selon une ou plusieurs des revendications précédentes, caractérisé en ce qu'un élément d'actionnement, notamment un élément formant levier (12) est disposé entre la tige de tension (14) de l'amplificateur d'effort de freinage et l'obturateur (16) de la valve de commande de dépression, cet élément d'actionnement (12) servant à déplacer l'obturateur (16) en vue du réglage optimal de la course à vide de cet obturateur (16) et/ou en vue du réglage de l'effet de saut, connu en soi, de l'amplificateur.

10. Amplificateur d'effort de freinage selon une ou plusieurs des revendications précédentes, caractérisé en ce que le boîtier de l'amplificateur est constitué de la partie de boîtier (2), disposée du côté du compartiment moteur, et de la partie de cylindre (1) disposée du côté du compartiment intérieur et qu'il est prévu, en tant qu'organe de guidage pour l'air extérieur ou l'air comprimé, un élément tubulaire (5) qui est de préférence relié d'une manière étanche, par l'intermédiaire d'une membrane à déroulement d'air extérieur (41), à la partie de boîtier (2) de l'amplificateur.

11. Amplificateur d'effort de freinage selon une ou plusieurs des revendications précédentes, caractérisé en ce que le maître-cylindre (3), qui comporte une enveloppe cylindrique en matière plastique, est disposé sur la partie de boîtier (2) en étant réalisé sur cette dernière par moulage par injection.

12. Amplificateur d'effort de freinage selon une ou plusieurs des revendications précédentes, caractérisé en ce qu'un élément (40), en matière plastique, de guidage de la membrane à déroulement d'air extérieur (41) est disposé sur la partie de boîtier (2) en étant réalisé sur cette dernière par moulage par injection.

13. Amplificateur d'effort de freinage selon une ou plusieurs des revendications précédentes, caractérisé en ce que le raccord de dépression (39), en matière plastique, de l'amplificateur est disposé sur la partie de boîtier (2) en étant réalisé sur cette dernière par moulage par injection.

14. Amplificateur d'effort de freinage selon une ou plusieurs des revendications précédentes, caractérisé en ce que la partie de boîtier (2) comprend des parties repoussées destinées à recevoir les ressorts de rappel (4) du servopiston pneumatique et en ce qu'il est prévu notamment trois ressorts de rappel (4) qui sont disposés d'une manière décalée d'une valeur angulaire de 120° sur un cercle de répartition.

15. Amplificateur d'effort de freinage selon une ou plusieurs des revendications précédentes, caractérisé en ce que l'amplificateur d'effort de freinage comprend une ou plusieurs pattes ou rebords servant à la fixation sur le tablier du compartiment moteur.

16. Amplificateur d'effort de freinage selon une ou plusieurs des revendications précédentes, équipé d'un maître-cylindre qui est réalisé sous la forme d'un ensemble à cylindres jumelés, caractérisé en ce que la partie de cylindre (1) du boîtier de l'amplificateur d'effort de freinage comporte une ouverture elliptique (31) comportant une surface de guidage et une butée pour le boîtier de commande.

17. Amplificateur d'effort de freinage selon une ou plusieurs des revendications précédentes, caractérisé en ce qu'un support de membrane à déroulement de boîtier de commande (7) est emboîté à force, d'une manière étanche à la dépression, dans la partie de cylindre (1).

18. Amplificateur d'effort de freinage selon une ou plusieurs des revendications précédentes, caractérisé en ce que le support de membrane à déroulement de boîtier de commande (7) comporte un évidement, notamment une fente, afin d'assurer le fonctionnement libre de la pédale de frein (8).

19. Amplificateur d'effort de freinage selon une ou plusieurs des revendications précédentes, caractérisé en ce que la partie de cylindre (1) et la partie de boîtier (2) sont pourvues chacune d'une bride et en ce que les brides sont agencées d'une façon telle qu'on obtient un centrage entre le boîtier de commande (6) et le maître-cylindre (3).

20. Amplificateur d'effort de freinage selon une ou plusieurs des revendications précédentes, caractérisé en ce que la bride de la partie de cylindre (1), d'une part, et la bride de la partie de boîtier (2), d'autre part, sont agencées d'une façon telle qu'avant l'assemblage, la partie de cylindre et la partie de boîtier sont centrées l'une vis-à-vis de l'autre et en ce qu'il peut ensuite être réalisé une jonction par complémentarité de formes entre la partie de cylindre et la partie de boîtier, par exemple par sertissage.

21. Amplificateur d'effort de freinage selon une ou plusieurs des revendications précédentes, caractérisé en ce que la "dimension d'ouverture K" de l'obturateur en forme de plateau (16) de la valve de commande de dépression (10) vis-à-vis du siège de valve (24) de cette valve, dimension qui sert à raccourcir la course à vide, et la "dimension Z" qui sert à régler l'effet de saut en soi connu sont réglées au moyen de la mise en place de l'élément formant levier (12) sur la partie de cylindre (1) après que le boîtier de commande (6) ait été monté sur la partie de cylindre (1) du boîtier de l'amplificateur d'effort de freinage.

22. Amplificateur d'effort de freinage selon une ou plusieurs des revendications précédentes, caractérisé en ce qu'il est par exemple prévu une tige de tension (14) qui est disposée d'une manière mobile dans un trou allongé ménagé dans le boîtier de commande (6) et en ce que le trou allongé et la tige de tension constituent une limitation de course du piston d'actionnement (13) lors de la libération et de l'actionnement du frein.

23. Amplificateur d'effort de freinage selon une ou plusieurs des revendications précédentes, qui est pourvu d'un maître-cylindre réalisé sous la forme d'un ensemble à cylindres jumelés, caractérisé en ce que l'extrémité du boîtier de commande (6) en matière plastique qui est située du côté de la dépression est pourvue d'un alésage ovale destiné à recevoir l'ensemble à cylindres jumelés (3) et en ce que l'alésage est renforcé par un anneau métallique (17), notamment un anneau en acier, qui absorbe les efforts de flexion, provenant notamment de l'ensemble à cylindres jumelés, qui se produisent en cas de défaillance d'un cylindre (52, 53) de cet ensemble à cylindres jumelés.

24. Amplificateur d'effort de freinage selon une ou plusieurs des revendications précédentes, caractérisé en ce que le tube d'air extérieur (5) est réalisé sous la forme d'un conduit de pression pneumatique dans le cas d'un amplificateur d'effort de freinage mis en charge.

25. Amplificateur d'effort de freinage selon une ou plusieurs des revendications précédentes, caractérisé en ce que, dans le plateau à membrane (18) de l'amplificateur d'effort de freinage, il est prévu des parties repoussées destinées à recevoir les ressorts de rappel (4) et en ce que les parties repoussées sont disposées d'une manière décalée entre elles d'une valeur angulaire de 120° sur un cercle de répartition.

26. Amplificateur d'effort de freinage selon une ou plusieurs des revendications précédentes, caractérisé en ce que l'ensemble à cylindres jumelés (3) est constitué de deux chemises de cylindre (19, 25), entourées de matière plastique par moulage par injection, et d'une unité à piston à pression différentielle (51) disposée au-dessus des chemises de cylindre et perpendiculairement à ces chemises de cylindre.

27. Amplificateur d'effort de freinage selon une ou plusieurs des revendications précédentes, caractérisé en ce qu'il est prévu un dispositif d'aspiration du liquide de frein qui comprend un ensemble de valve centrale, comporte une coupelle d'aspiration (22) qui est maintenue par un boîtier de valve centrale (23) dans une gorge (29) ménagée dans le fond (37) de l'alésage de maître-cylindre (43), comprend une tige à section circulaire (33) qui fait saillie dans le trou (44) de raccordement du réservoir de liquide de frein et est agencée de façon à pouvoir être actionnée de l'extérieur, en réglant la course à vide, comprend un support de valve (34) qui est emboîté à force sur la tige à section circulaire (33), comprend un obturateur (35) qui entoure au moins partiellement le support de valve (34), et comporte une pièce filetée (36) qui est montée dans le piston de maître-cylindre (45) en étant immobilisée en rotation, mais en étant mobile axialement, la tige à section circulaire (33) étant disposée de façon à pouvoir être vissée dans la pièce filetée (36).

28. Amplificateur d'effort de freinage selon une ou plusieurs des revendications précédentes, caractérisé en ce que, du côté du compartiment intérieur du véhicule, il est disposé une partie extérieure de boîtier (27) qui entoure au moins partiellement la partie de cylindre (1) du boîtier d'amplificateur, qui est reliée par complémentarité de formes au boîtier d'amplificateur et sur laquelle un support de pédale (26) est fixé.

29. Amplificateur d'effort de freinage selon une ou plusieurs des revendications précédentes, caractérisé en ce que la pédale de frein (8), la pédale d'embrayage (11), le contacteur de feux stop (28) et/ou le générateur d'embrayage (38) sont disposés sur le support de pédale (26).

30. Amplificateur d'effort de freinage selon une ou plusieurs des revendications précédentes, dont la partie d'asservissement pneumatique est réalisée suivant une structure en tandem, caractérisé en ce que le fond intermédiaire (46) de la partie d'asservissement tandem comporte un anneau d'étanchéité à guidage qui constitue une butée pour le boîtier de commande (6).

31. Amplificateur d'effort de freinage selon une ou plusieurs des revendications précédentes, dont la partie pneumatique d'asservissement est réalisée suivant une structure en tandem, caractérisé en ce que le fond intermédiaire (46) est pourvu d'une bride et en ce que les brides du fond intermédiaire, de la partie de cylindre (1) et de la partie de boîtier (2) du boitier d'amplificateur sont agencées d'une façon telle que, lors de l'assemblage, un centrage et, à la suite, une jonction par complémentarité de formes, par exemple un sertissage, puissent être exécutés.

32. Amplificateur d'effort de freinage selon une ou plusieurs des revendications précédentes, dont la partie pneumatique d'asservissement est réalisée suivant une structure en tandem, caractérisé en ce que le boîtier de commande (6) est pourvu d'un conduit (47) par lequel la chambre de dépression (48) de l'amplificateur d'effort de freinage qui est située du côté du compartiment intérieur du véhicule est évacuée de son air.

33. Amplificateur d'effort de freinage selon une ou plusieurs des revendications précédentes, dont la partie pneumatique d'asservissement est réalisée suivant une structure en tandem, caractérisé en ce que la chambre de pression (49) de l'amplificateur d'effort de freinage qui est disposée du côté de l'intérieur du véhicule reçoit de l'air par l'intermédiaire de l'évidement (54), ou de la fente, dans lequel l'élément formant levier (12) se déplace.

34. Amplificateur d'effort de freinage selon une ou plusieurs des revendications précédentes, caractérisé en ce, pour le positionnement des ressorts (4) de rappel du plateau à membrane, il est prévu une pièce annulaire (113) en matière plastique qui est appliquée sur le plateau de membrane.

35. Amplificateur d'effort de freinage selon une ou plusieurs des revendications précédentes, caractérisé en ce le boîtier d'amplificateur est constitué de la partie de boîtier (2), disposée du côté du compartiment moteur, et de la partie de cylindre (1) disposée du côté du compartiment intérieur et en ce qu'en tant qu'organe de guidage pour l'air extérieur ou l'air de pression, il est prévu un élément tubulaire (5) qui est relié d'une manière étanche à la partie de boîtier (2) de l'amplificateur au moyen d'une membrane à déroulement d'air extérieur (41).
